# EUROPÄISCHE PATENTSCHRIFT

(11) **EP 0 671 566 B1**
(45) Veröffentlichungstag und Bekanntmachung des Hinweises auf die Patenterteilung: **09.09.1998**
(21) Anmeldenummer: 95810105.7
(22) Anmeldetag: 17.02.1995
(51) Int. Cl.: F16B 37/04, B62D 33/04, E04B 2/76

(54) **Eckverbindung**
Corner joint
Jonction à coin

(30) Priorität: 09.03.1994 CH 697/94
(43) Veröffentlichungstag der Anmeldung: 13.09.1995
(73) Patentinhaber: Alusuisse Technology & Management AG, 8212 Neuhausen am Rheinfall (CH)
(72) Erfinder: Röllin, Ulrich, CH-8048 Zürich (CH)

(56) Entgegenhaltungen:
- EP-A- 0 136 264
- EP-A- 0 331 865
- EP-A- 0 375 619
- CH-A- 627 982
- GB-A- 2 169 375

## Beschreibung

Die Erfindung betrifft eine lösbare Eckverbindung zwischen zwei in einem Winkel stehenden Leichtmetallprofilen mit Seitenwänden und mit wenigstens einer eine Längsöffnung aufweisenden, mittels einander gegenüberliegenden Profillappen gebildeten, beidseits hinterschnittenen Nut mit angeformten Flanschen und einem in Längsrichtung der Nut in einem Abstand zur Hinterschneidung befindlichen Profilsteg, wobei die Verbindung zwischen den Leichtmetallprofilen durch einen wenigstens teilweise in die Nut der Leichtmetallprofile einführbaren Eckwinkel geschieht, wobei der Eckwinkel zwei im Winkel befindliche Schenkel mit je einer federartigen Anformung aufweist und jeder Schenkel des Eckwinkels an den entsprechenden Leichtmetallprofilen durch wenigstens eine Klemm-Schraubverbindung festgelegt ist, wobei jede Schraube in ein Gewinde eines von vorn in die Nut einführbaren Klemmplättchens eingreift und das Klemmplättchen in die Hinterschneidungen der Nut greift.

Aus der EP-A-0 136 264 ist eine gattungsgemäße lösbare Eckverbindung bekannt.

Aus der CH 627 982 sind Verbindungen von Metallprofilen mittels Eckverbindungsstücken, insbesondere für den Zusammenbau von Gerippestrukturen für Wagenkasten von Strassen- und Schienenfahrzeugen bekannt. Das dabei beschriebene Eckverbindungsstück weist federartige Anformungen auf, welche in nutenartige Vertiefungen der Metallprofile geführt und durch Schraubverbindungen festgelegt werden. Die Schraubverbindungen enthalten Klemmstücke, welche in die nutenartigen Vertiefungen der Metallprofile eingesetzt und sodann in Hinterschneidungen der nutenartigen Vertiefungen eingeschwenkt werden. Die oberen Flächen der Profillappen stehen in einem rechten Winkel zu den Seiten wänden.

Aus der EP-A-0 375 619 ist eine gattungsähnliche Eckverbindung bekannt, wobei Anschläge des Eckwinkels in Nuten in den oberen, in einem rechten Winkel zu den Seiten wänden stehenden, Flächen der Profillappen greifen.

Derartige auf Reibschluss basierende Profilverbindungen erlauben in Profillängsrichtung nur eine geringe Kraftübertragung, so dass solche Verbindungen zur Erfüllung ihrer vorgesehenen Aufgabe oft eine zusätzliche mechanische Verstärkung wie beispielsweise eine Schweissverbindung benötigen. Derartige Verstärkungen sind in ihrer Herstellung jedoch relativ aufwendig und erschweren zudem ein allfälliges späteres Lösen der Eckverbindung.

Es sind auch Klemmverbindungen bekannt, welche nach dem Prinzip der konischen Formgebung der Reibflächen das Auseinanderdrücken der Profilseitenwände verhindern soll. In der Praxis entsprechen die Resultate nicht immer den theoretischen Annahmen. Dies ist besonders bei dünnwandigen und langen seitlichen Profilstegen der Fall.

Aufgabe vorliegender Erfindung ist es, eine lösbare Klemmverbindung der eingangs genannten Art zu schaffen, welche oben dargelegte Nachteile vermeidet und durch eine Kombination einer Reibschluss-/Formschlussverbindung auch bei dünnwandigen, langen Profilseitenwänden hohen Beanspruchungen gewachsen ist.

Erfindungsgemäss wird dies dadurch erreicht, dass längs den Schenkeln des Eckwinkels randständig und gegen die Profillappen gerichtet Anschläge angeordnet sind, und in den Profillappen im Bereich der Verbindungsstelle von Profillappen und Flanschen längslaufende Kerben angeordnet sind, und die Tiefe der Kerben gleich oder grösser ist als die Höhe der Anschläge, und die Anschläge in die Kerben greifen, und die Profillappen obere Flächen aufweisen, die in einem rechten Winkel zu den Seitenwänden und den angeformten Flanschen stehen, und die sich zwischen dem Klemmplättchen und dem Profillappen ausbildende Reibfläche der aktiven Reibfläche zwischen Schenkel und Profillappen entspricht.

Die erfindungsgemässe Verbindung eignet sich zweckmässigerweise für eine lösbare Eckverbindung von Leichtmetallprofilen, wie beispielsweise Profilen aus Aluminium. Mit der Bezeichnung Aluminium sind in vorliegender Erfindung auch alle handelsüblichen Aluminiumlegierungen umfasst. Bevorzugt werden Aluminium und dessen Legierungen.

Der für die erfindungsgemässe Verbindung benötigte Eckwinkel weist zwei in einem Winkel befindliche Schenkel, gegebenenfalls mit je einer federförmigen Anformung auf. Dabei können die Schenkel des Eckwinkels einen beliebigen Winkel zwischen 0 und 180° einschliessen. Bevorzugt beträgt der Winkel zwischen beiden Schenkeln jedoch 90°. Die federförmigen Anformungen (Federn) oder kragenförmigen Ansätze der beiden Eckwinkel-Schenkel weisen entweder eine zur hinterschnittenen, nutenförmigen Vertiefung passgenaue Form auf, oder aber ihre Breite ist schmaler als die Breite der hinterschnittenen Nut. Zudem sind die Eckwinkel-Schenkel zweckmässigerweise derart geformt, dass deren Breite kleiner ist als der durch die beiden an die Profile angeformten Flansche definierte Abstand. Eine passgenaue Ausführung der Schenkel mit den an die Profile angeformten Flansche unterstützt neben einer mit der hinterschnittenen Nut passgenauen Feder die seitliche Führung der Profil-Eckwinkel-Verbindung.

Die für die Verbindung benötigten Eckwinkel weisen längs, zweckmässig randnah und vorzugsweise randständig, an jedem Schenkel je zwei Anschläge oder Nasen oder Wülste auf. Die Anschläge sind gegen die Profillappen des Leichtmetallprofiles gerichtet und können über einen Teil oder den ganzen Schenkel laufen. Die Anschläge greifen in Kerben, welche im Bereich der Verbindungsstelle von Profillappen und angeformten Flanschen angeordnet sind. Die Tiefe der Kerben ist beispielsweise 1 bis 5 mm, die Breite der Kerben ist beispielsweise 2 bis 8 mm. Der Querschnitt der Kerben kann halbrund, U-förmig oder rechteckig sein. Der Querschnitt der Anschläge kann entsprechend halbrund, U-förmig oder rechteckig sein. Die Breite und Höhe der Anschläge entspricht maximal der Breite und Tiefe der Kerbe, zweckmässig ist die Breite der Anschläge 70 bis 90 % der Breite der Kerbe und die Höhe der Anschläge ist 70 bis 90 % der Tiefe der Kerbe.

Das seitliche Ausweichen der Seitenwände mit dem Profillappen wird durch die Formschlussverbindung in der Profilquerrichtung aufgehoben.

Die Reibschlussverbindung zwischen den Eckwinkel-Schenkeln und den Profilen kann dadurch erfindungsgemäss in Profillängsrichtung eine höhere, mechanische Beanspruchung aufnehmen und benötigt bei den meisten Belastungsgrössen somit keine zusätzlichen Schweissnähte, Schraub- oder Nietverbindungen.

Damit können für die Eckwinkel sämtliche handelsüblichen Werkstoffe, die eine der Anwendung entsprechende Festigkeit und Elastizität ausweisen, verwendet werden. Bevorzugt werden jedoch Eckwinkel aus Aluminium oder dessen Legierungen eingesetzt.

Der Eckwinkel kann auch einstückig, beispielsweise in Form eines Guss- oder Schmiedestückes oder als gebogenes Strangpressprofil ausgebildet sein.

Die Klemm-Schraubverbindungen können bereits vor dem Einfügen des Eckwinkels in die nutförmigen Vertiefungen der Profile an den entsprechenden Eckwinkel-Schenkeln festgelegt werden. Beim Zusammenfügen der Profile mit dem Eckwinkel selbst werden dann die Federn des Eckwinkels in die Nuten der Profile gestossen und dabei die entsprechenden Klemmplättchen der Klemm-Schraubverbindung in Längsrichtung in die Nutenöffnung eingeführt. Da das Klemmplättchen eine Gewindebohrung aufweist, in welche eine den Eckwinkel durchsetzende Schraube eingreift, kann es nunmehr in einfacher Weise durch Drehung der Schraube in die Hinterschneidungen der nutartigen Vertiefung des Profiles eingeschwenkt werden. Die Schenkel des Eckwinkels können in ihrer Dicke so gewählt werden, dass die Bohrungen für die Schrauben angesenkt und Senkkopfschrauben angewendet werden können. Die dazu notwendige Stärke des Eckwinkels kann auch durch eine ausgeprägte federförmige Anformung erreicht werden. Das Festziehen der Klemm-Schraubverbindung geschieht somit ausschliesslich von der Aussenseite des Eckwinkels her, so dass kein Gegenhaltewerkzeug für das Klemmplättchen notwendig ist.

Die Klemmplättchen können auf der Seite, die gegen die Profillappen gerichtet sind Keilflächen aufweisen, welche mit Keilflächen der Profillappen korrespondieren. Beim Festziehen des Klemmplättchens zentriert sich das Klemmplättchen durch die gegenseitige Berührung und gegebenenfalls Gleitbewegung der Keilflächen von Klemmplättchen und Profillappen.

Die Klemmplättchen können beispielsweise auch als Parallelogramm ausgebildet sein, wobei der grössere Durchmesser des Parallelogramms grösser ist als die Nutweite. Hierdurch verkeilt sich das Klemmplättchen automatisch beim Festziehen der Klemmschrauben an den Nutinnenwänden, so dass ein Durchdrehen des Klemmplättchens vermieden wird.

Die Klemmplättchen weisen vorteilhaft keilförmig angeordnete Reibflächen auf, die den keilförmigen Auflageflächen der Profillappen kongruent sind.

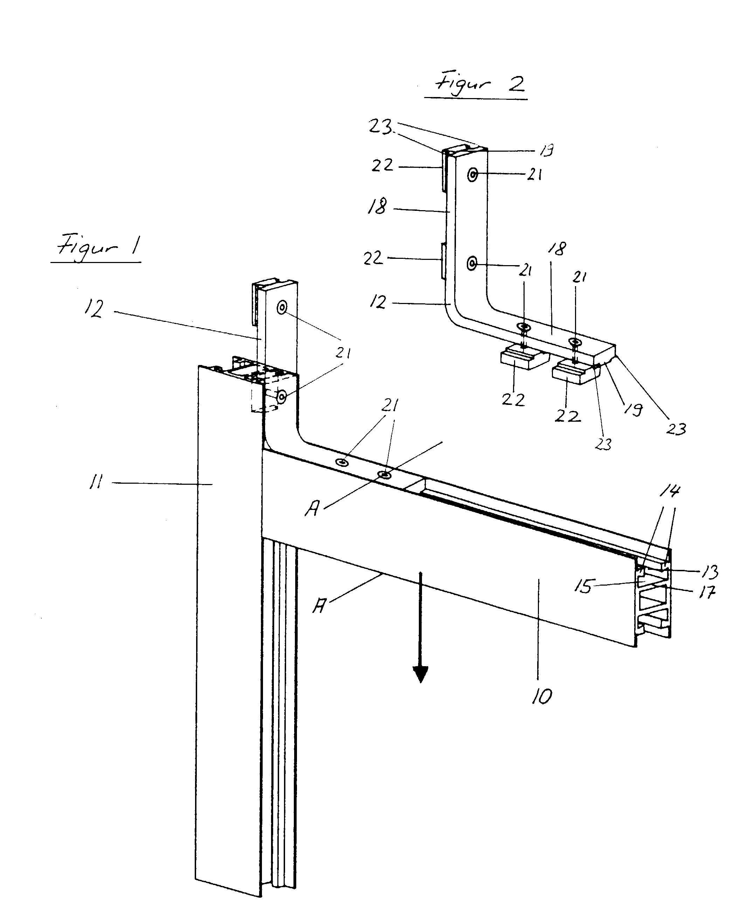

Vorliegende Erfindung wird beispielhaft an den Figuren 1 bis 3 weiter erläutert.

Die Figur 1 zeigt eine lösbare Eckverbindung gemäss vorliegender Erfindung. Die Abbildung stellt einen momentanen Zustand im Zeitpunkt des Fügens der Profile dar. Ein erstes Profil 10 und ein zweites Profil 11 werden hier beispielhaft in einem Winkel von 90° zueinander gefügt. Zu diesem Zwecke wird zuerst ein Eckwinkel 12, beispielsweise am ersten Profil 10 befestigt. Beispielhaft hat vorliegender Eckwinkel an jedem Schenkel 18 je zwei Bohrungen, welche von je einer Schraube 21 durchdrungen sind. Die Schraube durchdringt auch die Längsöffnung 13 im ersten Profil und in der hinterschnittenen Nut 15 sind die Klemmplättchen 22 (hier nicht sichtbar) angeordnet, welche mit der Schraube 21 die Klemm-Schraubverbindung 20 bilden. Durch Festziehen der Schrauben 21 werden die Klemmplättchen 22 gegen die Profillappen 14 gezogen. Weisen die Profillappen 14 eine keilförmige Verjüngung ihres Querschnittes auf und haben die Klemmplättchen 22 entsprechende Keilflächen, werden die Klemmplättchen mit dem Festziehen zentriert. Der Eckwinkel 12 wird derart ausgerichtet, dass er am Ende des ersten Profils 10 in Schenkeldicke übersteht. Am andern Schenkel 18 des Eckwinkels 12 werden mit den Schrauben 21 zwei weitere Klemmplättchen 22 lose befestigt. Dann wird das erste Profil 10 mit dem daran befestigten Eckwinkel 12 und den lose aufgeschraubten Klemmplättchen 22 in Pfeilrichtung bewegt und derart gefügt, dass die Klemmplättchen 22 in die hinterschnittene Nut des Profiles 11 gleiten. Anschliessend kann das erste Profil 10 gegenüber dem zweiten Profil 11 nach Massgabe der beabsichtigten Konstruktion ausgerichtet werden. Durch Festziehen der Schrauben 21 und somit der Wirkung der Klemm-Schraubverbindung 20 kann das erste Profil 10 fest am zweiten Profil 11 befestigt werden.

Es ist auch möglich, auf der dem Eckwinkel gegenüberliegenden Seite des ersten Profiles einen zweiten Eckwinkel anzubringen und diesen zweiten Eckwinkel entsprechend mit Klemmplättchen auch am zweiten Profil zu befestigen. Dies führt zu einer erhöhten Festigkeit des ersten Profiles 10 am zweiten Profil 11. Beispielhaft ist das erste und das zweite Profil ein Profil mit spiegelsymmetrisch angeordneten hinterschnittenen Nuten. Andere Profilformen mit einer hinterschnittenen Nut auf nur einer Seite sind ebenfalls denkbar.

Die Figur 2 zeigt einen Eckwinkel 12 mit seinen beiden Schenkeln 18, den Klemmplättchen 22 und entsprechend den Schrauben 21. Anstelle von zwei Klemmplättchen an jedem Schenkel 18 des Eckwinkels 12 können auch symmetrisch oder asymmetrisch beispielsweise eine, drei oder mehr als drei Schrauben und Klemmplättchen pro Schenkel vorgesehen werden. Anstelle einzelner Klemmplättchen können auch Klemmleisten, welche zwei oder mehrere der Schraubenlöcher überdecken und entsprechend zwei oder mehrere Schrauben benötigen, vorgesehen werden, wobei bei dieser Variante das Einschieben in Längsrichtung erfolgt. Der Eckwinkel 12 weist an beiden Schenkeln je eine federartige Anformung 19 auf. Ebenfalls weisen beide Schenkel 18 des Eckwinkels 12 randständig die Anschläge 23 auf. Die Eckwinkel 12 können beispielsweise gebogene Strangpressprofile oder gebogene gewalzte Profile oder Guss-/Schmiedestücke darstellen, wobei die Materialwahl wenig kritisch ist, so dass zu deren Herstellung Stahl, Eisen, Buntmetalle oder bevorzugt Aluminium und dessen Legierungen verwendet werden können. Die Klemmplättchen 22 oder allfällige Klemmleisten können ebenfalls Strangpressprofile oder Walzprodukte oder Guss/Schmiedestücke aus den genannten Materialien sein, wobei beispielsweise Klemmplättchen oder -leisten aus Stahl bevorzugt werden, um ein Ausreissen des Gewindes zu verhindern.

In einer möglichen weiteren Ausführungsform kann das Klemmplättchen in Draufsicht die Form eines Parallelogrammes und dabei insbesondere eines Rhomboides aufweisen. Derartige Klemmplättchen können in die Nut eingesetzt werden. Sobald das Verschrauben beginnt, dreht sich das Klemmplättchen um etwa 90° und verkeilt sich mit den Nuteninnenwänden.

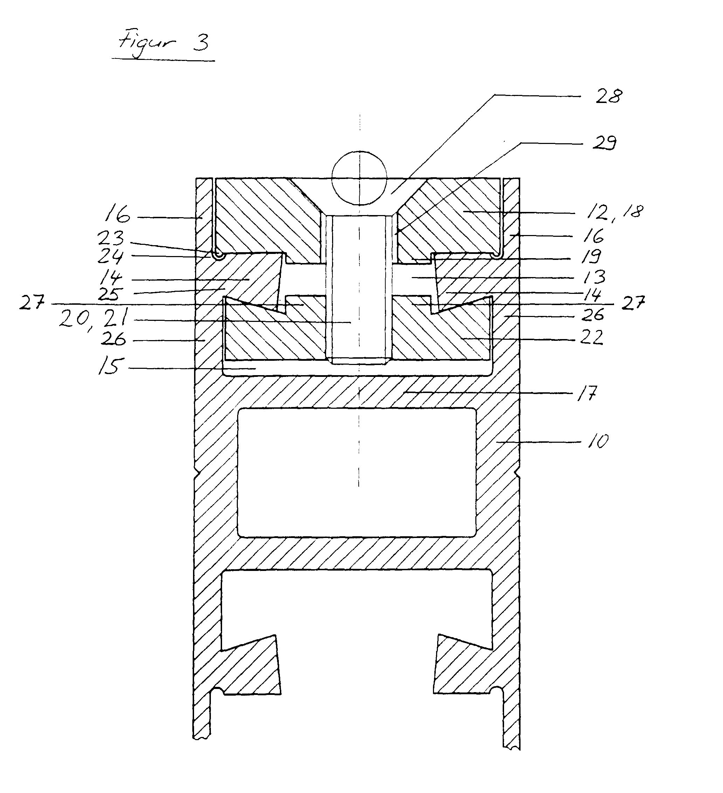

Die Figur 3 stellt einen Schnitt zwischen den Linien A-A durch das erste Profil 10 und die Klemm-Schraubverbindung 20 dar. Im ersten Profil 10 -- die Anordnung wäre im zweiten Profil 11 identisch -- ist der Schenkel 18 des Eckwinkels 12 zwischen den angeformten Flanschen 16 angeordnet. Zweckmässig ist der Schenkel 12 bündig mit den oberen Enden der beiden Flansche 16. Die Anschläge 23 am Schenkel 18 greifen in die Kerben 24.

Die federartige Anformung 19 am Schenkel 18 greift in die Längsöffnung 13. Wird die federartige Anformung 19 relativ stark ausgebildet, führt eine Ansenkung 28 der Schraubenlöcher 29 nicht zu einer unerwünschten Materialschwächung. Die Längsöffnung 13 wird begrenzt durch die beiden Profillappen 14 und die Profillappen 14 weisen in ihrem Querschnitt eine keilförmige Verjüngung 25 auf. Die gegen den Schenkel 18 des Eckwinkels gerichtete Fläche des Profillappens 14 steht, bezogen zu den angeformten Flanschen 16, respektive den Seitenwänden 26 des Profils, in einem Winkel von 90°. Die gegen die hinterschnittene Nut 15 gerichteten Seiten der Profillappen 14 verjüngen sich nach oben aussen. Das Klemmplättchen 22 weist dieser Steigung entsprechende keilförmige Querschnitte auf. Wird das Klemmplättchen 22 mit der Schraube 21 zu einer Klemm-Schraubverbindung 20 zusammengefügt, und die Schraubverbindung festgezogen, zentriert sich das Klemmplättchen 22 aufgrund der keilförmigen Ausbildung von Profillappen und Klemmplättchen. Da der Profillappen 14 und das Klemmplättchen 22 zwei kongruente keilförmige Querschnitte aufweisen, bilden sich Reibflächen oder Berührungsflächen aus.

Die zur Längsöffnung 13 weisenden Seitenwände der Profillappen 14 sind nach der hinterschnittenen Nut 15 hin leicht eingezogen. Diese Schrägstellung der Seitenwände des Profillappens 14 wird derart gewählt, dass die sich zwischen dem Klemmplättchen 22 und dem Profillappen 14 ausbildende Reibfläche exakt der aktiven Reibfläche zwischen Schenkel 12 und Profillappen 14 entspricht.

In zweckmässiger Ausführungsform weist das Klemmplättchen 22 einen Kragenansatz 27 auf und das Klemmplättchen ist von einer Gewindeöffnung durchdrungen, wobei die nutzbare Gewindelänge im Klemmplättchen 22 dem 1- bis 1,5-fachen Gewindedurchmesser der Schraube 21 entspricht.

In zweckmässiger Ausführungsform entspricht die lichte Höhe zwischen der unteren Begrenzung des Profillappens 14 und dem Profilsteg 17 der 1-bis 1,5-fachen, insbesondere der 1,1 bis 1,5-fachen, Dicke des Klemmplättchens 22.

Mit der erfindungsgemässen Klemm-Schraubverbindung gelingt es, insbesondere bei dünnwandigen und langen Profilseitenwänden, das Auseinanderdrücken der Profilseitenwände 26 zu verhindern. Durch die Anschläge 23 in den Kerben 24 einerseits und den keilförmigen Anschrägungen der Profillappen 14, respektive der Klemmplättchen 22, wird ein Spreizen der Seitenwände 26 sicher verhindert.

Die erfindungsgemässen Eckverbindungen können beispielsweise zum Verbinden von Profilen und zum Aufbau von flächenhaften Konstruktionen, wie Fassaden-, Wand-, Boden- oder Deckenteilen von Gebäuden oder Karrosserieteilen von Fahrzeugen, wie Lastkraftwagen, Omnibussen, Eisenbahnwagen, Strassenbahnwagen usw. angewendet werden. Mit den erfindungsgemässen Eckverbindungen zwischen Profilen können auch dreidimensionale Körper, wie Karrosserien von Fahrzeugen aufgebaut werden.

## Patentansprüche

1. Lösbare Eckverbindung zwischen zwei in einem Winkel stehenden Leichtmetallprofilen (10,11) mit Seitenwänden (26) und mit wenigstens einer eine Längsöffnung (13) aufweisenden, mittels einander gegenüberliegenden Profillappen (14) gebildeten, beidseits hinterschnittenen Nut (15) mit angeformten Flanschen (16) und einem in Längsrichtung der Nut (15) in einem Abstand zur Hinterschneidung befindlichen Profilsteg (17), wobei die Verbindung zwischen den Leichtmetallprofilen (10,11) durch einen wenigstens teilweise in die Nut der Leichtmetallprofile (10,11) einführbaren Eckwinkel (12) geschieht, wobei der Eckwinkel (12) zwei im Winkel befindliche Schenkel (18) mit je einer federartigen Anformung (19) aufweist und jeder Schenkel (18) des Eckwinkels (12) an den entsprechenden Leichtmetallprofilen (10,11) durch Klemm-Schraubverbindungen (20) festgelegt ist, wobei jede Schraube (21) in ein Gewinde eines von vorn in die Nut (15) einführbaren Klemmplättchens (22) eingreift und das Klemmplättchen (22) in die Hinterschneidungen der Nut greift,
dadurch gekennzeichnet, dass
längs den Schenkeln (18) des Eckwinkels (12), gegen die Profillappen (14) gerichtet, Anschläge (23) angeordnet sind, und in den Profillappen (14) im Bereich der Verbindungsstelle von Profillappen (14) und Flanschen (16) längslaufende Kerben (24) angeordnet sind, und die Tiefe der Kerben (24) gleich oder grösser ist als die Höhe der Anschläge (23), und die Anschläge (23) in die Kerben (24) greifen, und die Profillappen (14) obere Flächen aufweisen, die in einem rechten Winkel zu den Seitenwänden und den angeformten Flanschen (16) stehen, und die sich zwischen dem Klemmplättchen (22) und dem Profillappen (14) ausbildende Reibfläche der aktiven Reibfläche zwischen Schenkel (12) und Profillappen (14) entspricht.

2. Eckverbindung gemäss Anspruch 1, dadurch gekennzeichnet, dass der Querschnitt der Profillappen sich gegen die Seitenwände keilförmig verjüngt.

3. Eckverbindung gemäss Anspruch 1, dadurch gekennzeichnet, dass der für die Verbindung benötigte Eckwinkel (12) an jedem Schenkel (18) gegen die Profillappen (14) gerichtet randnah und vorzugsweise randständig, Anschläge (23) aufweist.

4. Eckverbindung gemäss Anspruch 1, dadurch gekennzeichnet, dass die Klemmplättchen (22) keilförmig angeordnete Reibflächen aufweisen, die den keilförmigen Auflageflächen der Profillappen kongruent sind.

5. Eckverbindung gemäss Anspruch 1, dadurch gekennzeichnet, dass der Eckwinkel (12) mittels Senkkopfschrauben (21) eingebaut wird.

6. Eckverbindung gemäss Anspruch 1, dadurch gekennzeichnet, dass das Klemmplättchen (22) einen Kragenansatz (27) hat, das Klemmplättchen (22) von einer Gewindeöffnung durchdrungen ist und die nutzbare Gewindelänge im Klemmplättchen (22) dem 1- bis 1,5-fachen Gewindedurchmesser entspricht.

7. Eckverbindung gemäss Anspruch 1, dadurch gekennzeichnet, dass die lichte Höhe zwischen der unteren Begrenzung des Profillappens (14) und dem Profilsteg (17) der 1- bis 1,5-fachen Dicke des Klemmplättchens (22) entspricht.

## Claims

1. Detachable corner joint between two light metal sections (10, 11) at an angle, comprising side walls (26) and at least one groove (15) undercut on both sides, formed by means of opposing profiled tabs (14) and having a longitudinal opening (13) with moulded-on flanges (16), and a profiled web (17) situated at a distance from the undercut in the longitudinal direction of the groove (15), the joint between the light metal sections (10, 11) being produced by means of a corner angle (12) which can be introduced at least partially into the groove in the light metal sections (10, 11), the corner angle (12) having two arms (18) at an angle each with a tongue-like moulded-on portion (19), and each arm (18) of the corner angle (12) being secured to the corresponding light metal sections (10, 11) by means of clamping screw joints (20), each screw (21) engaging in a thread of a clamping plate (22) which can be introduced into the groove (15) from the front and the clamping plate (22) engaging in the undercuts of the groove, characterised in that stops (23) are arranged along the arms (18) of the corner angle (12), directed towards the profiled tabs (14), longitudinally extending notches (24) are arranged in the profiled tabs (14) in the region of the joint between the profiled tabs (14) and the flanges (16), the depth of the notches (24) is equal to or greater than the height of the stops (23), the stops (23) engage in the notches (24), the profiled tabs (14) have upper surfaces at a right angle to the side walls and the moulded-on flanges (16) and the friction surface forming between the clamping plate (22) and the profiled tab (14) corresponds to the active friction surface between the arm (12) and the profiled tab (14).

2. Corner joint according to claim 1, characterised in that the cross section of the profiled tabs tapers in a wedge-shaped manner towards the side walls.

3. Corner joint according to claim 1, characterised in that the corner angle (12) required for the joint is provided on each arm (18) with stops (23) close to the edge and preferably on the edge and directed towards the profiled tabs (14).

4. Corner joint according to claim 1, characterised in that the clamping plates (22) have wedge-shaped friction surfaces congruent with the wedge-shaped bearing surfaces of the profiled tabs.

5. Corner joint according to claim 1, characterised in that the corner angle (12) is fitted by means of countersunk screws (21).

6. Corner joint according to claim 1, characterised in that the clamping plate (22) has a collar shoulder (27), the clamping plate (22) is traversed by a threaded opening and the effective thread length in the clamping plate (22) corresponds to 1 to 1.5 times the thread diameter.

7. Corner joint according to claim 1, characterised in that the clearance between the lower boundary of the profiled tab (14) and the profiled web (17) corresponds to I to 1.5 times the thickness of the clamping plate (22).

## Revendications

1. Jonction de coin détachable entre deux profilés de métal léger (10, 11) disposés sous un angle, comprenant des parois latérales (26) et au moins une gorge (15) en contre-dépouille des deux côtés, qui présente une ouverture longitudinale (13) et qui est formée au moyen d'ailes de profilés (14) mutuellement opposées, avec des brides moulées (16) et une âme de profilé (17) située à distance de la contre-dépouille en direction longitudinale de la gorge (15), la liaison entre les profilés de métal léger (10, 11) ayant lieu grâce à au moins une équerre de coin (12) susceptible d'être au moins partiellement introduite dans la gorge des profilés de métal léger (10, 11), l'équerre de coin (12) présentant deux bras (18) disposés sous un angle et présentant chacun une conformation en forme de languette (19), et chaque bras (18) de l'équerre de coin (12) étant fixé sur les profilés de métal léger correspondants (10, 11) par des liaisons de coincement/vissage (20), et chaque vis (21) étant engagée dans un taraudage d'une plaquette de coincement (22) susceptible d'être introduite depuis l'avant dans la gorge (15), et la plaquette de coincement (22) s'engage dans les contre-dépouilles de la gorge,
caractérisée en ce que
des butées (23) dirigées vers les ailes de profilés (14) sont agencées le long des bras (18) de l'équerre de coin (12), et en ce que des entailles (24) qui s'étendent longitudinalement sont ménagées dans les ailes de profilés (14) dans la région de l'emplacement de jonction entre les ailes de profilés (14) et des brides (16), la profondeur des entailles (24) étant égale ou supérieure à la hauteur des butées (23) et les butées (23) s'engagent dans les entailles (24), et en ce que les ailes de profilés (14) présentent des surfaces supérieures qui sont disposées à angle droit par rapport aux parois latérales par rapport aux brides moulées (16), et la surface de friction qui se forme entre la plaquette de coincement (22) et l'aile de profilé (14) correspond à la surface de friction active entre le bras (12) et l'aile de profilé (14).

2. Jonction de coin selon la revendication 1, caractérisée en ce que la section des ailes de profilés va en se rétrécissant en forme de coin vers les parois latérales.

3. Jonction de coin selon la revendication 1, caractérisée en ce que l'équerre de coin (12) nécessaire pour la liaison comporte sur chaque bras (18) des butées (23) dirigées vers les ailes de profilés (14), disposés à proximité de la bordure et de préférence en saillie sur la bordure.

4. Jonction de coin selon la revendication 1, caractérisée en ce que les plaquettes de coincement (22) comportent des surfaces de friction agencées en forme de coin, qui sont congruentes vis-à-vis des surfaces d'appui en forme de coin des ailes de profilés.

5. Jonction de coin selon la revendication 1, caractérisée en ce que l'équerre de coin (12) est assemblée au moyen de vis à tête fraisée (21).

6. Jonction de coin selon la revendication 1, caractérisée en ce que la plaquette de coincement (22) possède un talon en forme de collerette (27), en ce que la plaquette de coincement (22) est traversée par une ouverture taraudée, et la longueur de taraudage utile dans la plaquette de coincement (22) correspond à 1 à 1,5 fois le diamètre du taraudage.

7. Jonction de coin selon la revendication 1, caractérisée en ce que la hauteur libre entre la délimitation inférieure de l'aile de profilé (14) et l'âme de profilé (17) correspond à 1 à 1,5 fois l'épaisseur de la plaquette de coincement (22).
